(19) Europäisches Patentamt / European Patent Office / Office européen des brevets

(11) **EP 2 789 589 B1**

(12) **EUROPEAN PATENT SPECIFICATION**

(45) Date of publication and mention
of the grant of the patent:
**17.05.2017  Bulletin 2017/20**

(51) Int Cl.:
***C03B 37/014*** *(2006.01)*

(21) Application number: **14163703.3**

(22) Date of filing: **07.04.2014**

(54) **Glass optical fibre preform and method for its manufacture**

Vorform aus Glas für optische Fasern und Verfahren zu deren Herstellung

Préforme en verre pour des fibres optiques et procédé de sa fabrication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.04.2013   JP 2013080441**
**27.05.2013   JP 2013110480**

(43) Date of publication of application:
**15.10.2014   Bulletin 2014/42**

(73) Proprietor: **Shin-Etsu Chemical Co., Ltd.
Tokyo 100-0004 (JP)**

(72) Inventor: **Nakajima, Hitoshi
Gunma 379-0127 (JP)**

(74) Representative: **Pfenning, Meinig & Partner mbB
Patent- und Rechtsanwälte
Joachimsthaler Straße 12
10719 Berlin (DE)**

(56) References cited:
**CN-A- 1 472 150       JP-A- S6 046 942
JP-A- S59 190 236      JP-A- 2003 171 136
JP-A- 2004 018 364     JP-A- 2005 239 444**

**Description**

BACKGROUND

1. TECHNICAL FIELD

The present invention relates to an optical fiber glass base material manufacturing method, particularly to a method of manufacturing an optical fiber glass base material that has an interface between the first cladding and the second cladding near a mode field region and to the resulting optical fiber glass base material itself.

2. RELATED ART

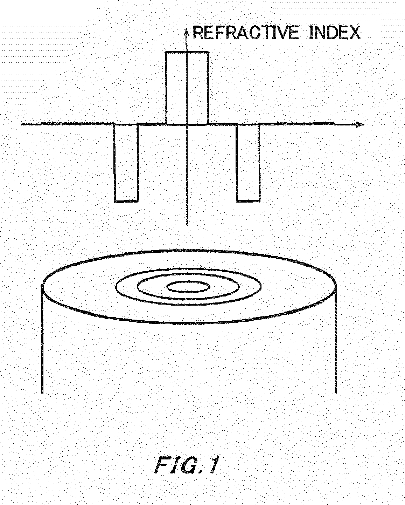

Known methods for producing an optical fiber glass base material are described, e.g., in the prior art documents JP 2003 171136 A, CN 1472 150 A and JP S60 46942 A. JP 2003 171136 A, in particular, relates to a method comprising the features of the preamble of claim 1. VAD and OVD are commonly known techniques for manufacturing an optical fiber glass preform. An optical fiber has a structure such as shown in Fig. 1, in which a core having a high refractive index is formed as a central portion, a first cladding having a lower refractive index than the core is formed around the outside of the core, a second cladding having a lower refractive index than the first cladding is formed around the outside of the first cladding, and a third cladding having a higher refractive index than the second cladding is formed around the outside of the second cladding. This type of optical fiber has an increased light trapping effect for light of the basic mode due to the second cladding, and an effect of reducing the leakage of transmitted light (bending loss) when the optical fiber is bent is realized. Here, the core, the first cladding, and the second cladding are in a range according to the mode field of the transmitted light, and therefore it is necessary to significantly reduce the impurities that cause light absorption loss, such as metal and OH groups.

With VAD, a technique is known in which a plurality of burners are used to synthesize types of glass with different refractive indexes, e.g. the core, first cladding, and second cladding, all at once. However, when manufacturing the optical fiber glass base material having a structure such as shown in Fig. 1, it is difficult to achieve a refractive index distribution with a clear stepped form. In particular, when adding fluorine as a dopant for reducing the refractive index in the second cladding, the fluorine is dispersed throughout all of the glass during the sintering process, and it is difficult to selectively add the fluorine to only the second cladding portion.

On the other hand, as a method for efficiently doping the second cladding with fluorine, a synthesis method is known that includes preparing an intermediate base material that has a core and a first cladding using VAD, depositing a porous glass layer of the second cladding on the intermediate base material using OVD, and then adding the fluorine when performing sintering of this structure. With this synthesis method, the intermediate base material having the core and first cladding is formed first using VAD or the like, and the synthesized intermediate base material is then elongated to have a prescribed diameter. Next, the glass layer including OH groups on the surface of the elongated intermediate base material is removed using etching or the like, and OVD is used to manufacture the starting base material. With OVD, a glass fine particle synthesis burner is arranged to face the starting base material, which rotates with the core as a central axis, and the starting base material and burner are moved back and forth relative to each other in a direction along the rotational axis of the starting base material. In this state, the glass fine particles generated by hydrolysis of glass raw material in an oxyhydrogen flame are deposited on the starting base material, after which the resulting structure is dehydrated in an atmosphere containing chlorine and then transparent vitrification is performed in an atmosphere containing fluorine, thereby realizing the second cladding that contains fluorine.

With this type of synthesis method, however, the adhesive strength between the starting base material and the second cladding is low, and therefore peeling can occur at the interface between the starting base material and the second cladding.

SUMMARY

According to a first aspect of the present invention, provided is an optical fiber glass base material manufacturing method that includes flame polishing an outside of a starting base material that includes a core and a first cladding with an oxyhydrogen flame and then arranging a glass fine particle synthesis burner facing the starting base material, which rotates, moving the starting base material and the burner back and forth relative to each other along the starting base material, and depositing glass fine particles produced by hydrolysis of glass raw material in the oxyhydrogen flame as a porous glass layer of a second cladding, the method comprising synthesizing and depositing the glass fine particles under conditions in which a hydrogen flow rate during a first back and forth deposition pass performed immediately after supply of raw material is started is between 4% and 200% greater than a normal hydrogen flow rate.

According to a second aspect of the invention, a corresponding optical fiber glass base material according to claim 6 is suggested, which can be manufactured by the manufacturing method described above.

BRIEF DESCRIPTION OF THE DRAWINGS

Fig. 1 is a schematic view of the optical fiber manufactured according to the method of the present invention and the refractive index distribution of this optical fiber.

Fig. 2 shows the relationship of transmission los at 1383 nm with respect to the ratio between the mode field radius and the radius of the interface between the first cladding and the second cladding in an optical fiber that includes 1.3 ppm of OH groups in the second cladding.

Fig. 3 shows the relationship between the hydrogen flow rate and the number of passes of the burner in the first embodiment.

Fig. 4 shows the OH group concentration in a radial direction of the optical fiber glass base material manufactured according to the first embodiment of the method of the present invention, wherein the vertical axis represents the OH group concentration and the horizontal axis represents the radial distance (mm) from the center of the base material.

Fig. 5 shows the refractive index distribution of the optical fiber manufactured according to the first embodiment of the method of the present invention, wherein the vertical axis represents the refractive index difference $(n-n_0)$ and the relative refractive index difference $\Delta$ (%) and the horizontal axis represents the radial distance ($\mu$m) from the center of the fiber.

DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

The optical fiber glass base material manufacturing method of the present embodiment is a method for manufacturing an optical fiber glass base material formed by at least three layers including a core, a first cladding, and a second cladding. This method includes a starting base material preparation step of preparing a starting base material that includes a core and a first cladding, a second cladding deposition step of depositing glass fine particles generated by the hydrolysis of glass raw material in an oxyhydrogen flame onto the starting base material, and a vitrification step of dehydrating the porous body resulting from the deposition in an atmosphere containing chlorine and then performing transparent vitrification in an atmosphere containing fluorine.

The starting base material preparation step of preparing a starting base material includes a VAD step of manufacturing a porous glass base material having a core and a first cladding using VAD, a dehydration step of heating and dehydrating the porous glass base material in a chlorine atmosphere, a vitrification step of forming the glass base material by performing heating and transparent vitrification of the dehydrated porous glass base material in a helium atmosphere, an elongation step of adjusting the outer diameter of the glass base material by heating and elongating the glass base material, and a surface layer removal step of removing a surface layer of the elongated glass base material. The core is doped with germanium. The surface layer removal step of removing the surface layer utilizes machine grinding or wet etching with hydrofluoric acid, for example.

Flame polishing of the starting base material, which is performed prior to the deposition of the second cladding, involves heating the surface of the starting base material with an oxyhydrogen flame that does not include the glass raw material, using a burner. In this way, a portion of the surface of the starting base material is melted and vaporized, such that scratches and foreign objects are removed. Furthermore, fluorine-type gas may be introduced into the flame, thereby improving the etching effect of the glass surface.

After the flame polishing, in order to deposit the porous glass layer of the second cladding on the starting base material, the glass raw material is supplied to the oxyhydrogen flame and the glass fine particles, which are generated by hydrolysis in the oxyhydrogen flame, are deposited. At this time, the oxygen, hydrogen, and glass raw material are preferably divided uniformly among a plurality of burners, such that the deposition rate is improved when depositing the glass fine particles generated by each burner.

During the deposition of the first back and forth pass directly after the supplying of the raw material begins, in order to prevent peeling at the interface between the starting base material and the second cladding, it is necessary to increase the adhesion at the interface. Therefore, an effective technique includes sufficiently increasing the temperature of the deposition flame for the porous glass layer of the second cladding and increasing the density of the deposited porous glass layer. In order to increase the temperature of the deposition flame for the porous glass layer of the second cladding, the hydrogen flow rate is increased beyond the rate that is normally used so that the hydrogen flow rate is at least 4% greater than the rate that is normally used. If this increase is less than 4%, the temperature of the deposition flame is not increased and it is easy for peeling to occur at the interface between the second cladding and the starting base material due to lowered density of the porous glass layer at the interface. On the other hand, if the hydrogen flow rate is increased too much and the temperature of the deposition flame becomes too high, the bulk density of the porous glass layer increases and the relative surface area decreases, which makes it difficult for the dopant gas such as $SIF_4$ and the dehydration gas such as $Cl_2$ to be dispersed in the thermal processing performed later, and also makes it difficult for the replacement of the low-molecular gas for the transparent vitrification, such as He, to progress. Therefore, the increased hydrogen flow rate is no more than 200% of the normal hydrogen flow rate.

In the optical fiber glass base material manufactured using the synthesis method described above, during the flame polishing with the oxyhydrogen flame performed prior to the deposition of the porous glass layer of the second cladding or during the deposition of the first layer of the porous glass layer, since the starting base material is directly contacted by the oxyhydrogen flame, it is easy for OH groups to penetrate and spread toward the inside of the starting base material from the outer surface. Therefore, in order to restrict the penetration and spreading of OH groups into the starting base material, it is preferable for the increase in the hydrogen flow rate to be no greater than 130% of the normal hydrogen flow rate. Furthermore, the normal hydrogen flow rate conditions are preferably used from the second deposition pass and onward, and in this case, in order to restrict the penetration and spread of OH groups into the starting base material, the hydrogen flow rate used for the first pass is preferably increased by no more than 35% beyond the normal hydrogen flow rate.

The heat of the oxyhydrogen flame blowing the glass fine particles used in the second pass and onward for depositing the porous glass layer spreads to the interface with the starting base material, and therefore it is easy for OH groups to penetrate inward from the interface of the starting base material. In particular, in order to increase the production rate and increase the adhesion at the interface between the starting base material and the second cladding, the firing density of the porous glass layer is increased using the high-temperature flame, and therefore the temperature increases and the OH dispersion rate also increases. As a result, the OH group concentration in the direction of the diameter of the optical fiber glass base material is extremely large at the interface between the starting base material and the second cladding.

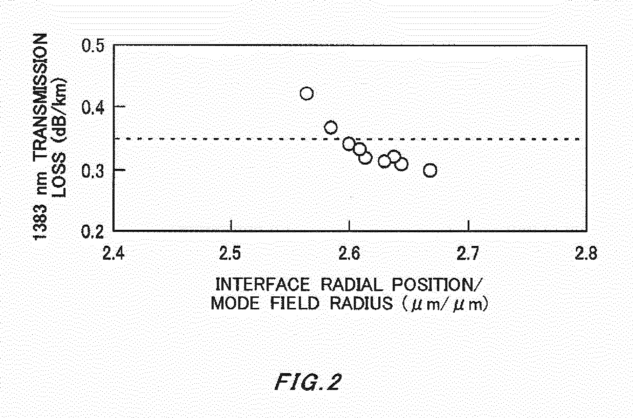

As a result, when there is an interface between the first cladding and the second cladding at a position near the mode field region, the transmission loss caused by the interface OH groups is increased. Fig. 2 shows results obtained by manufacturing an optical fiber glass base material that includes 1.3 ppm of OH groups in the second cladding, drawing this base material while changing the fiber diameter, and measuring the transmission loss of the fiber at 1383 nm. By changing the fiber diameter, the relationship between the mode field diameter and the radial position of the interface can be changed. An absorption loss peak was found due to the OH groups at 1383 nm. In a case where the ratio between the radial position of the interface and the mode field radius at a wavelength of 1310 nm (corresponding to half of the mode field diameter at a wavelength of 1310 nm) is 2.6 or more, the absorption loss at 1383 nm is 0.35 dB/km or less. In other words, when this ratio is 2.6, the localized OH group concentration at the interface between the first cladding and the second cladding is preferably 1.3 ppm or less. Furthermore, when this ratio is less than 2.6, the localized OH group concentration at the interface is preferably reduced even further. In a case where the density of the porous glass layer is too high, it becomes difficult to uniformly dope the porous glass layer with the fluorine when performing the thermal processing at a later step.

Therefore, the hydrogen flow rate during the second pass and onward for depositing the porous glass layer is reduced to be below the normal hydrogen flow rate. As a result, the penetration and spreading of OH groups can be restricted due to the reduction in the amount of heat transmitted near the interface with the starting base material. In this case, it is preferable that the increase in the hydrogen flow rate for the first back and forth pass be at least 30% of the normal hydrogen flow rate. When this increase is less than 30%, it is easy for peeling to occur at the interface between the starting base material and the second cladding due to a decrease in the porous glass layer density at the interface. The amount of the decrease in the hydrogen flow rate for the second back and forth pass and onward is preferably 35% to 50% of the normal hydrogen flow rate. If this decrease is less than 35%, the effect of decreasing the OH group concentration is too weak, and if this decrease is greater than 50%, it is easy for peeling to occur at the interface between the starting base material and the porous glass layer due to a decrease in the porous glass layer density at the interface. The range over which the decreased hydrogen flow rate continues is preferably 20 to 40 passes following the second deposition pass. If this decrease continues for less than 20 passes, the OH reduction effect is too weak, and if this decrease continues for more than 40 passes, the average bulk density of the porous glass layer decreases and cracking is likely to occur.

Here, the normal flow rate is the gas flow rate that is set after the second pass of the deposition or after the period of deposition performed with the reduced hydrogen flow following the second pass, until deposition is finished, and during the thermal processing performed at a later step, the gas flow rate is set to realize an average bulk density with which it is easy to dope the porous glass layer with the fluorine. If the second cladding is a pure silica cladding, the average bulk density of the porous glass layer is set to be greater than or equal to 0.4 g/cm$^3$, or greater than or equal to 0.5 g/cm$^3$ in order to improve the production rate, but with the present invention, the average bulk density is set to be from 0.25 g/cm$^3$ to 0.5 g/cm$^3$, preferably from 0.25 g/cm$^3$ to 0.4 g/cm$^3$. If the average bulk density is less than 0.25 g/cm$^3$, the production rate decreases and cracking is likely to occur in the porous glass layer. If the average bulk density is greater than 0.4 g/cm$^3$, a trend is seen that uniform doping with the fluorine becomes difficult. The average bulk density is calculated as shown in the expression below.

$$\rho = \frac{kW_S}{\pi L (D_S^2 - D_T^2)/4}$$

Here, $\rho$ is the average bulk density of the porous glass layer, $W_S$ is the deposition weight of the porous glass layer, L is the trunk length of the porous glass layer, $D_S$ is the outer diameter of the porous glass layer, $D_T$ is the diameter of the starting base material, and k is a coefficient that accounts for the tapered portions at the ends of the trunk portion. The following describes embodiments of the present invention using Embodiments 1 to 6 and Comparative Examples 1 and 2, but the present invention is not limited to these embodiments and can be formed in many different states.

[Embodiment 1]

a porous silica glass base material made of a core and a first cladding was manufactured using VAD, and then underwent a dehydration step, a vitrification step, and an elongating step to manufacture a glass base material with an outer diameter of 39 mm. The core was doped with germanium, and the first cladding was pure silica glass. A portion with a thickness of 2 mm was removed from the surface of the glass base material through wet etching, and the resulting starting base material had an outer diameter of 35 mm and a length of 600 mm. While rotating this starting base material using the core as the axis, a burner arranged facing the axis at a right angle was supplied with hydrogen at a flow rate of 50 L/min and oxygen at a flow rate of 25 L/min to produce an oxyhydrogen flame, and flame polishing was performed by moving this burner back and forth in a direction parallel to the starting base material at a speed of 90 mm/min.

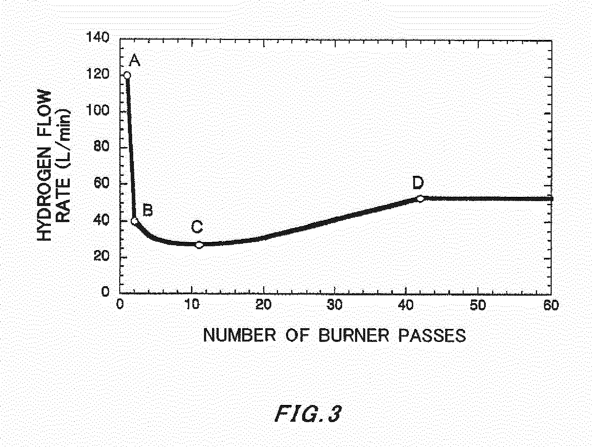

After this, the porous glass layer of the second cladding was deposited on the starting base material using OVD. Two deposition burners for the porous glass layer were prepared, and arranged facing the starting base material at a right angle relative to the rotational axis of the starting base material. Argon gas carrying hydrogen, oxygen, and silicon tetrachloride, which is the glass raw material, was branched and supplied uniformly to each burner. Fig. 3 shows the relationship between the hydrogen flow rate and the number of burner passes after the supply of the raw material begins. The hydrogen flow rate during the first deposition pass immediately after the beginning of the raw material supply was 120 L/min (see Fig. 3-A), and the oxygen flow rate was 44 L/min. This hydrogen flow rate is an increase of approximately 130% relative to the normal flow rate of 53 L/min. The hydrogen flow rate for the second deposition pass and onward began at 40 L/min (see Fig. 3-B), which is less than the normal flow rate of 53 L/min, gradually decreased to 27 L/min (see Fig. 3-C), which is equal to a decrease of 49% of the normal flow rate, at the eleventh pass, and then the hydrogen flow rate was gradually increased continuously until the 41$^{st}$ pass as deposition was performed with the reduced hydrogen flow rate, until the 42$^{nd}$ pass at which the hydrogen flow rate reached the normal flow rate of 53 L/min (see Fig. 3-D). In this way, a region was formed in which the hydrogen flow rate from the second deposition pass and onward was reduced below the normal flow rate, to deposit the porous glass layer.

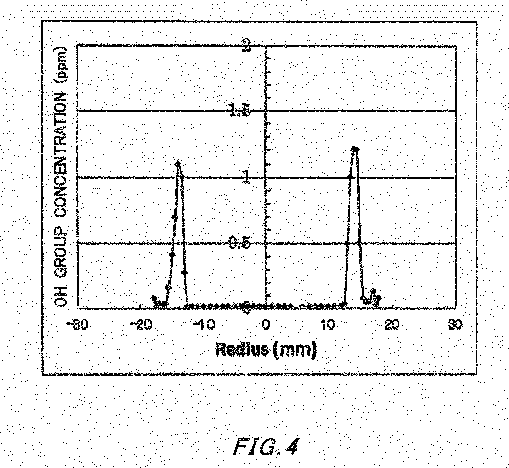

The deposition was ended when the attached deposition amount reached 1810 g. The average bulk density of the porous glass layer was 0.28 g/cm$^3$. After this, dehydration was performed by using an electric furnace to heat the resulting structure to 1200°C in an atmosphere containing chlorine, and then transparent vitrification was performed by heating the structure to 1350°C in an atmosphere containing silicon tetrafluoride, thereby obtaining an optical fiber glass base material with an outer diameter of 52 mm. There was no peeling at the interface between the starting base material and the second cladding in the optical fiber glass base material obtained in this manner. This optical fiber glass base material was cleaved and the cleaved surfaces were mirror polished to create a sample for analysis with a length of 100 mm, and Fig. 4 shows the results obtained by measuring the amount of OH groups included in the radial direction by using infrared absorption spectroscopy. The spot size for the infrared absorption analysis was 1.5 mm. In Fig. 4, the peak value of the OH concentration is a maximum value of 1.2 ppm at the position of the interface between the starting base material and the second cladding.

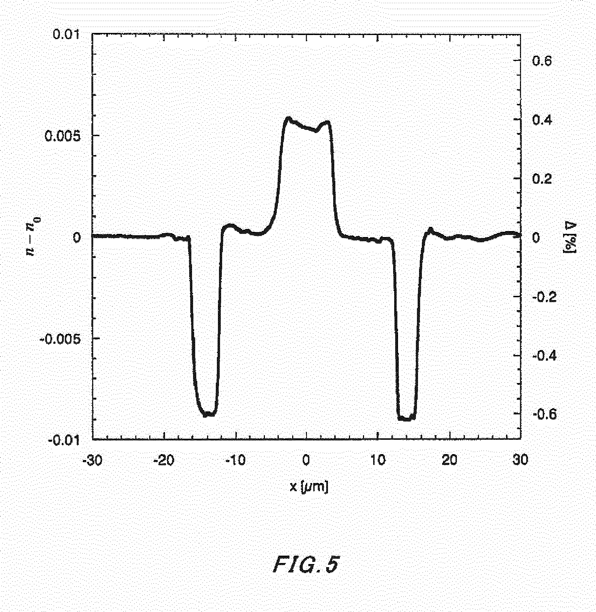

After using a glass lathe to elongate this optical fiber glass base material, which has a core/first cladding/second cladding structure, the surface of the glass base material was wet etched using hydrofluoric acid in order to remove a prescribed amount of the surface and a third cladding layer of pure silica glass was added around the resulting surface, thereby obtaining the final optical fiber glass base material having a core/first cladding/second cladding/third cladding structure. This final optical fiber glass base material was drawn to form an optical fiber with a diameter of 125 $\mu$m. Fig. 5 shows the results obtained by measuring the refractive index distribution of this optical fiber with a fiber analyzer. In Fig. 5, the relative refractive index difference $\Delta$ of the second cladding remains flat at -0.6%, and so it is understood that the doping with the fluorine was uniform. The mode field diameter of this fiber for a wavelength of 1310 nm was 8.6 $\mu$m, and the transmission loss for a wavelength of 1383 nm was 0.31 dB/km.

(Embodiment 2)

Using the same method as in Embodiment 1, a starting base material was formed including a core and a first cladding and having an outer diameter of 35 mm and a length of 600 mm. The core was doped with germanium, and the first cladding was pure silica glass. Flame polishing of the starting base material was performed by supplying a burner with hydrogen at a flow rate of 50 L/min and oxygen at a flow rate of 25 L/min to produce an oxyhydrogen flame and moving this burner back and forth for one pass at a speed of 50 mm/min. After this, the porous glass layer of the second cladding was deposited on the starting base material using OVD. The gas conditions for the first deposition pass immediately after the beginning of the raw material supply were set to be a hydrogen flow rate of 70 L/min and an oxygen flow rate of 44 L/min. This hydrogen flow rate is 32% greater than the normal flow rate of 53 L/min.

The gas conditions were such that the hydrogen flow rate from the second deposition pass and onward began at 45 L/min, which is less than the normal flow rate of 53 L/min, gradually decreased to 35 L/min, which is a decrease equal to 34% of the normal flow rate, at the 11th pass, and then the hydrogen flow rate was gradually increased continuously until the 21st pass as deposition was performed with the reduced hydrogen flow rate, until the 22nd pass at which the hydrogen flow rate reached the normal flow rate of 53 L/min. The deposition was ended when the attached deposition amount reached 1480 g. The average bulk density of the porous glass layer was 0.32 g/cm$^3$. After this, dehydration was performed by using an electric furnace to heat the resulting structure to 1200°C in an atmosphere containing chlorine, and then transparent vitrification was performed by heating the structure to 1350°C in an atmosphere containing silicon tetrafluoride, thereby obtaining an optical fiber glass base material with an outer diameter of 50 mm. There was no peeling at the interface between the starting base material and the second cladding in the optical fiber glass base material obtained in this manner. This optical fiber glass base material was cleaved and the cleaved surfaces were mirror polished to create a sample for analysis. Upon measuring the OH group concentration in the radial direction, the OH group concentration was found to have a maximum value of 1.3 ppm at the interface between the starting base material and the second cladding. The relative refractive index difference $\Delta$ of the second cladding had a flat distribution at -0.5%.

(Embodiment 3)

Using the same method as in Embodiment 1, a starting base material was formed including a core and a first cladding and having an outer diameter of 32 mm and a length of 600 mm. The core was doped with germanium, and the first cladding was pure silica. In the same manner as in Embodiment 1, flame polishing of the surface of the starting base material was performed by supplying a burner with hydrogen at a flow rate of 50 L/min and oxygen at a flow rate of 25 L/min to produce an oxyhydrogen flame and moving this burner back and forth for one pass at a speed of 90 mm/min. After this, the porous glass layer of the second cladding was deposited on the starting base material using OVD. The hydrogen flow rate for the first deposition pass immediately after the beginning of the raw material supply was set to 70 L/min, which is 32% greater than the flow rate under normal conditions. The oxygen flow rate was set to 44 L/min, which is the normal condition.

The hydrogen flow rate from the second deposition pass and onward returned to the normal flow rate of 53 L/min, and the deposition was ended when the attached deposition amount reached 2050 g. The average bulk density of the porous glass layer was 0.35 g/cm$^3$. After this, dehydration was performed by using an electric furnace in an atmosphere containing chlorine, and then transparent vitrification was performed in an atmosphere containing silicon tetrafluoride, thereby obtaining an optical fiber glass base material with an outer diameter of 53 mm. This optical fiber glass base material was cleaved and the cleaved surfaces were mirror polished to create a sample for analysis. Upon measuring the OH group concentration in the radial direction, the OH group concentration was found to have a maximum value of 1.2 ppm at the interface between the starting base material and the second cladding. There was no peeling at the interface between the starting base material and the second cladding. The relative refractive index difference $\Delta$ of the second cladding had a flat distribution at -0.6%.

(Embodiment 4)

Using the same method as in Embodiment 1, a starting base material was formed including a core and a first cladding and having an outer diameter of 33 mm and a length of 600 mm. The core was doped with germanium, and the first cladding was pure silica. In the same manner as in Embodiment 1, flame polishing of the surface of the starting base material was performed by supplying a burner with hydrogen at a flow rate of 50 L/min and oxygen at a flow rate of 25 L/min to produce an oxyhydrogen flame and moving this burner back and forth for one pass at a speed of 90 mm/min. After this, the porous glass layer of the second cladding was deposited on the starting base material using OVD. The hydrogen flow rate for the first deposition pass immediately after the beginning of the raw material supply was set to 65 L/min, which is 23% greater than the flow rate under normal conditions. The oxygen flow rate was set to 44 L/min, which is the normal condition.

The hydrogen flow rate from the second deposition pass and onward returned to the normal flow rate of 53 L/min, and the deposition was ended when the attached deposition amount reached 1960 g. The average bulk density of the porous glass layer was 0.34 g/cm$^3$. After this, dehydration was performed by using an electric furnace to heat the resulting structure to 1200°C in an atmosphere containing chlorine, and then transparent vitrification was performed by heating the structure to 1350°C in an atmosphere containing silicon tetrafluoride, thereby obtaining an optical fiber glass base material with an outer diameter of 53 mm. There was no peeling at the interface between the starting base material and the second cladding in the optical fiber glass base material obtained in this manner. This optical fiber glass base material was cleaved and the cleaved surfaces were mirror polished to create a sample for analysis. Upon measuring the OH group concentration in the radial direction, the OH group concentration was found to have a maximum value of 1.2 ppm at the interface between the starting base material and the second cladding. The relative refractive index difference Δ of the second cladding had a flat distribution at -0.6%.

(Embodiment 5)

Using the same method as in Embodiment 1, a starting base material was formed including a core and a first cladding and having an outer diameter of 33 mm and a length of 600 mm. The core was doped with germanium, and the first cladding was pure silica. In the same manner as in Embodiment 1, flame polishing of the surface of the starting base material was performed by supplying a burner with hydrogen at a flow rate of 50 L/min and oxygen at a flow rate of 25 L/min to produce an oxyhydrogen flame and moving this burner back and forth for one pass at a speed of 90 mm/min. After this, the porous glass layer of the second cladding was deposited on the starting base material using OVD. The hydrogen flow rate for the first deposition pass immediately after the beginning of the raw material supply was set to 55 L/min, which is 4% greater than the flow rate under normal conditions. The oxygen flow rate was set to 44 L/min, which is the normal condition.

The hydrogen flow rate from the second deposition pass and onward returned to the normal flow rate of 53 L/min, and the deposition was ended when the attached deposition amount reached 1890 g. The average bulk density of the porous glass layer was 0.34 g/cm$^3$. After this, dehydration was performed by using an electric furnace to heat the resulting structure to 1200°C in an atmosphere containing chlorine, and then transparent vitrification was performed by heating the structure to 1350°C in an atmosphere containing silicon tetrafluoride, thereby obtaining an optical fiber glass base material with an outer diameter of 52 mm. There was a small amount of peeling at the end portions of the trunk at the interface between the starting base material and the second cladding in the optical fiber glass base material obtained in this manner, but there was no peeling at the interface in the region spanning over 90% of the trunk portion, and so this is a favorable result. This optical fiber glass base material was cleaved and the cleaved surfaces were mirror polished to create a sample for analysis. Upon measuring the OH group concentration in the radial direction, the OH group concentration was found to have a maximum value of 1.0 ppm at the interface between the starting base material and the second cladding. The relative refractive index difference Δ of the second cladding had a flat distribution at -0.6%.

(Embodiment 6)

Using the same method as in Embodiment 1, a starting base material was formed including a core and a first cladding and having an outer diameter of 35 mm and a length of 600 mm. The core was doped with germanium, and the first cladding was pure silica. Flame polishing of the surface of the starting base material was performed by supplying a burner with hydrogen at a flow rate of 50 L/min and oxygen at a flow rate of 25 L/min to produce an oxyhydrogen flame and moving this burner back and forth for one pass at a speed of 50 mm/min. After this, the porous glass layer of the second cladding was deposited on the starting base material using OVD. The hydrogen flow rate for the first deposition pass immediately after the beginning of the raw material supply was set to 110 L/min, which is 108% greater than the flow rate under normal conditions. The oxygen flow rate was set to 44 L/min, which is the normal condition.

The hydrogen flow rate from the second deposition pass and onward was set to the normal flow rate of 53 L/min, and the deposition was ended when the attached deposition amount reached 1420 g. The average bulk density of the porous glass layer was 0.35 g/cm$^3$. After this, dehydration was performed by using an electric furnace to heat the resulting structure to 1200°C in an atmosphere containing chlorine, and then transparent vitrification was performed by heating the structure to 1350°C in an atmosphere containing silicon tetrafluoride, thereby obtaining an optical fiber glass base material with an outer diameter of 47 mm. There was no peeling at the interface between the starting base material and the second cladding in the optical fiber glass base material obtained in this manner. This optical fiber glass base material was cleaved and the cleaved surfaces were mirror polished to create a sample for analysis. Upon measuring the OH group concentration in the radial direction, the OH group concentration was found to have a maximum value of 1.7 ppm at the interface between the starting base material and the second cladding.

(Comparative Example 1)

Using the same method as in Embodiment 1, a starting base material was formed including a core and a first cladding and having an outer diameter of 35 mm and a length of 600 mm. Flame polishing of the surface of the starting base material was performed by supplying a burner with hydrogen at a flow rate of 50 L/min and oxygen at a flow rate of 25 L/min to produce an oxyhydrogen flame and moving this burner back and forth for one pass at a speed of 90 mm/min. After this, the porous glass layer of the second cladding was deposited on the starting base material using OVD. The hydrogen flow rate for the first deposition pass immediately after the beginning of the raw material supply was set to 53 L/min and the oxygen flow rate was set to 44 L/min, which are the normal conditions. The deposition was ended when the attached deposition amount reached 1800 g. The average bulk density of the porous glass layer was 0.33 g/cm$^3$. After this, dehydration was performed by using an electric furnace to heat the resulting structure to 1200°C in an atmosphere containing chlorine, and then transparent vitrification was performed by heating the structure to 1350°C in an atmosphere containing silicon tetrafluoride. The resulting optical fiber glass base material exhibited peeling at the interface between the starting base material and the second cladding, and therefore the refractive index distribution measurement and OH group concentration analysis using infrared absorption spectroscopy were not performed.

(Comparative Example 2)

Using the same method as in Embodiment 1, a starting base material was formed including a core and a first cladding and having an outer diameter of 35 mm and a length of 600 mm. Flame polishing of the surface of the starting base material was performed by supplying a burner with hydrogen at a flow rate of 50 L/min and oxygen at a flow rate of 25 L/min to produce an oxyhydrogen flame and moving this burner back and forth for one pass at a speed of 90 mm/min. After this, the porous glass layer of the second cladding was deposited on the starting base material using OVD. The hydrogen flow rate for the first deposition pass immediately after the beginning of the raw material supply was set to 110 L/min and the oxygen flow rate was set to 44 L/min.

The gas conditions were such that the hydrogen flow rate from the second deposition pass and onward began at 36 L/min, which is less than the normal flow rate of 53 L/min, gradually decreased to 26 L/min, which is a decrease of 51% of the normal flow rate, at the 11$^{th}$ pass, and then the hydrogen flow rate was gradually increased continuously until the 36$^{th}$ pass as deposition was performed with the reduced hydrogen flow rate, until the 37$^{th}$ pass at which the hydrogen flow rate reached the normal flow rate of 53 L/min. The deposition was ended when the attached deposition amount reached 1600 g. The average bulk density of the porous glass layer was 0.28 g/cm$^3$. After this, dehydration was performed by using an electric furnace to heat the resulting structure to 1200°C in an atmosphere containing chlorine, and then transparent vitrification was performed by heating the structure to 1350°C in an atmosphere containing silicon tetrafluoride, thereby obtaining an optical fiber glass base material with an outer diameter of 51 mm. This optical fiber glass base material exhibited peeling at the interface between the starting base material and the second cladding, and therefore the refractive index distribution measurement and OH group concentration analysis using infrared absorption spectroscopy were not performed.

In this way, during the step of forming the second cladding on the starting base material that includes the core and the first cladding, the glass fine particles are deposited under conditions in which the hydrogen flow rate for the first deposition pass performed immediately after the start of the raw material supply is increased beyond the normal flow rate. As a result, peeling at the interface between the starting base material and the second cladding can be prevented. Furthermore, the hydrogen flow rate for the first pass is set to be at least 30% greater than the normal hydrogen flow rate, and the hydrogen flow rate for the second deposition pass and onward is set to be 35% to 50% less than the normal hydrogen flow rate. As a result, the peak value of the OH group concentration at the interface between the first cladding and the second cladding can be decreased. Therefore, in the optical fiber that is the final product, the transmission loss caused by the OH groups at the interface can be significantly decreased.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

Claims

1. An optical fiber glass base material manufacturing method that includes flame polishing an outside of a starting base material that includes a core and a first cladding with an oxyhydrogen flame and then arranging a glass fine particle synthesis burner facing the starting base material, which rotates, moving the starting base material and the burner back and forth relative to each other along the starting base material, and depositing glass fine particles produced by hydrolysis of glass raw material in the oxyhydrogen flame as a porous glass layer of a second cladding, the method **characterized by**:

   synthesizing and depositing the glass fine particles under conditions in which a hydrogen flow rate during a first back and forth deposition pass performed immediately after supply of raw material is started is between 4% and 200% greater than a normal hydrogen flow rate.

2. The optical fiber glass base material manufacturing method according to Claim 1, wherein the hydrogen flow rate during the first back and forth deposition pass performed immediately after the supply of raw material is started is 4% to 35% greater than the normal hydrogen flow rate, and the hydrogen flow rate from a second back and forth deposition pass and onward is the normal hydrogen flow rate.

3. The optical fiber glass base material manufacturing method according to Claim 1, wherein the glass fine particles are synthesized and deposited under conditions in which the hydrogen flow rate during the first back and forth deposition pass performed immediately after the supply of raw material is started is 30% to 130% greater than the normal hydrogen flow rate, and the hydrogen flow rate from a second back and forth deposition pass and onward is less than the normal hydrogen flow rate.

4. The optical fiber glass base material manufacturing method according to Claim 3, wherein there is a region in which the hydrogen flow rate from the second back and forth pass and onward is reduced by an amount equal to 35% to 50% of the normal hydrogen flow rate.

5. The optical fiber glass base material manufacturing method according to Claim 3 or 4, wherein deposition using the reduced hydrogen flow rate from the second back and forth pass and onward continues for 20 to 40 back and forth deposition passes.

6. An optical fiber glass base material manufactured according to the optical fiber glass base material manufacturing method of any of Claims 1 to 5, comprising a fire-polished core with surrounding first cladding and porous second cladding on the first cladding, **characterized in that**
   OH group concentration at an interface between the first cladding and the second cladding in the optical fiber glass base material is less than or equal to 1.3 ppm and a ratio between a radius of the interface and a mode field radius is greater than or equal to 2.6.

Patentansprüche

1. Verfahren zur Herstellung von Glasbasismaterial für optische Fasern, das das Flammenpolieren einer Außenseite eines Ausgangsbasismaterials, das einen Kern und eine erste Umhüllung enthält, mit einer Knallgasflamme und dann das Anordnen eines dem Ausgangsbasismaterial, das sich dreht, zugewandten Feinglasteilchen-Synthesebrenners, das Hin- und Herbewegen des Ausgangsbasismaterials und des Brenners relativ zueinander entlang des Ausgangsbasismaterials, und das Aufbringen von Feinglasteilchen, die durch Hydrolyse von rohem Glasmaterial in der Knallgasflamme gebildet wurden, als eine poröse Glasschicht einer zweiten Umhüllung enthält, welches Verfahren **gekennzeichnet ist durch**:

   Synthetisieren und Aufbringen der Feinglasteilchen unter Bedingungen, in denen eine Wasserstoff-Strömungsrate während eines ersten Hin- und Herbewegungs-Aufbringungsdurchgangs, der unmittelbar nach dem Beginn der Zuführung von Rohmaterial durchgeführt wird, zwischen 4 % und 200 % größer als eine normale Wasserstoff-Strömungsrate ist.

2. Verfahren zur Herstellung von Glasbasismaterial für optische Fasern nach Anspruch 1, bei dem die Wasserstoff-Strömungsrate während des ersten Hin- und Herbewegungs-Aufbringungsdurchgangs, der unmittelbar nach dem Beginn der Zuführung von Rohmaterial durchgeführt wird, 4 % bis 35 % größer als die normale Wasserstoff-Strömungsrate ist, und die Wasserstoff-Strömungsrate von einem zweiten Hin- und Herbewegungs-Aufbringungsdurchgang an und bei weiteren die normale Wasserstoff-Strömungsrate ist.

3. Verfahren zur Herstellung von Glasbasismaterial für optische Fasern nach Anspruch 1, bei dem die Feinglasteilchen unter Bedingungen synthetisiert und aufgebracht werden, bei denen die Wasserstoff-Strömungsrate während des unmittelbar nach dem Beginn der Zuführung von Rohmaterial durchgeführten, ersten Hin- und Herbewegungs-Aufbringungsdurchgangs 30 % bis 130 % größer als die normale Wasserstoff-Strömungsrate ist, und die Wasserstoff-Strömungsrate von dem zweiten Hin- und Herbewegungs-Aufbringungsdurchgang an und bei weiteren kleiner als die normale Wasserstoff-Strömungsrate ist.

4. Verfahren zur Herstellung von Glasbasismaterial für optische Fasern nach Anspruch 3, bei dem ein Bereich vorhanden ist, in welchem die Wasserstoff-Strömungsrate von dem zweiten Hin- und Herbewegungs-Durchgang an und bei weiteren um einen Betrag gleich 35 % bis 50 % der normalen Wasserstoff-Strömungsrate reduziert ist.

5. Verfahren zur Herstellung von Glasbasismaterial für optische Fasern nach Anspruch 3 oder 4, bei dem die Aufbringung unter Verwendung der reduzierten Wasserstoff-Strömungsrate von dem zweiten Hin- und Herbewegungs-Durchgang an und bei weiteren während 20 bis 40 Hin- und Herbewegungs-Aufbringungsdurchgängen fortgesetzt wird.

6. Glasbasismaterial für optische Fasern, das gemäß dem Verfahren zur Herstellung von Glasbasismaterial für optische Fasern nach einem der Ansprüche 1 bis 5 hergestellt wurde, aufweisend einen flammenpolierten Kern mit einer umgebenden ersten Umhüllung und einer porösen zweiten Umhüllung über der ersten Umhüllung, **dadurch gekennzeichnet, dass** eine OH-Gruppenkonzentration an einer Schnittfläche zwischen der ersten Umhüllung und der zweiten Umhüllung in dem Glasbasismaterial für optische Fasern geringer als oder gleich 1,3 ppm ist und ein Verhältnis zwischen einem Radius der Schnittfläche und einem Modusfeldradius größer als oder gleich 2,6 ist.

## Revendications

1. Procédé de fabrication d'un matériau de base en verre pour fibres optiques, lequel procédé inclut le polissage à la flamme de l'extérieur d'un matériau de base de départ qui inclut une âme et un premier gainage à l'aide d'une flamme oxyhydrique puis l'agencement d'un brûleur de synthèse de particules fines de verre de sorte qu'il fasse face au matériau de base de départ, lequel tourne, le déplacement du matériau de base de départ et du brûleur en va-et-vient l'un par rapport à l'autre suivant le matériau de base de départ et le dépôt de particules fines de verre produites par hydrolyse du matériau brut de verre dans la flamme oxyhydrique en tant que couche de verre poreuse d'un second gainage, le procédé étant **caractérisé par** :

   la synthèse et le dépôt des particules fines de verre sous des conditions selon lesquelles un débit d'hydrogène pendant une première passe de dépôt en va-et-vient qui est réalisée immédiatement après que l'alimentation du matériau brut est démarrée est entre 4 % et 200 % supérieur à un débit d'hydrogène normal.

2. Procédé de fabrication d'un matériau de base en verre pour fibres optiques selon la revendication 1, dans lequel :

   le débit d'hydrogène pendant la première passe de dépôt en va-et-vient qui est réalisée immédiatement après que l'alimentation du matériau brut est démarrée est de 4 % à 35 % supérieur au débit d'hydrogène normal, et le débit d'hydrogène à partir d'une deuxième passe de dépôt en va-et-vient ainsi que pour les passes de dépôt en va-et-vient ultérieures est le débit d'hydrogène normal.

3. Procédé de fabrication d'un matériau de base en verre pour fibres optiques selon la revendication 1, dans lequel :

   les particules fines de verre sont synthétisées et déposées sous des conditions selon lesquelles le débit d'hydrogène pendant la première passe de dépôt en va-et-vient qui est réalisée immédiatement après que l'alimentation du matériau brut est démarrée est de 30 % à 130 % supérieur au débit d'hydrogène normal, et le débit d'hydrogène à partir d'une deuxième passe de dépôt en va-et-vient ainsi que pour les passes de dépôt en va-et-vient ultérieures est inférieur au débit d'hydrogène normal.

**4.** Procédé de fabrication d'un matériau de base en verre pour fibres optiques selon la revendication 3, dans lequel :

il y a une région au niveau de laquelle le débit d'hydrogène à partir de la deuxième passe de dépôt en va-et-vient ainsi que pour les passes de dépôt en va-et-vient ultérieures est réduit d'une valeur qui est égale à 35 % à 50 % du débit d'hydrogène normal.

**5.** Procédé de fabrication d'un matériau de base en verre pour fibres optiques selon la revendication 3 ou 4, dans lequel :

le dépôt qui utilise le débit d'hydrogène réduit à partir de la deuxième passe de dépôt en va-et-vient ainsi que pour les passes de dépôt en va-et-vient ultérieures est poursuivi pendant 20 à 40 passes de dépôt en va-et-vient.

**6.** Matériau de base en verre pour fibres optiques fabriqué selon le procédé de fabrication d'un matériau de base en verre pour fibres optiques selon l'une quelconque des revendications 1 à 5, comprenant une âme polie au feu qui est entourée par un premier gainage et par un second gainage poreux sur le premier gainage, **caractérisé en ce que** :

une concentration en groupes OH au niveau d'une interface entre le premier gainage et le second gainage dans le matériau de base en verre pour fibres optiques est inférieure ou égale à 1,3 ppm (parties par million) et un rapport entre un rayon de l'interface et un rayon du champ modal est supérieur ou égal à 2,6.

FIG.1

*FIG.2*

FIG.3

EP 2 789 589 B1

FIG.4

15

*FIG.5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003171136 A
- CN 1472150 A
- JP 60046942 A